# EUROPEAN PATENT APPLICATION

(11) **EP 1 097 947 A1**
(43) Date of publication of application: **09.05.2001**
(21) Application number: 00919147.9
(22) Date of filing: 21.04.2000
(51) Int. Cl.: C08F 6/24, B01D 1/14

(54) **DEVICE AND METHOD FOR REMOVING UNREACTED MONOMER FROM POLYMER LATEX**

(30) Priority: 22.04.1999 JP 11516899
(71) Applicant: CHISSO CORPORATION, Osaka-shi, Osaka-fu 530-0005 (JP)
(72) Inventor: ITO, Yuichi, Ichihara-shi, Chiba 290-0156 (JP); MATSUDA, Etsuro, Minamata-shi, Kumamoto 867-0061 (JP); NOBUHARA, Hideo, Otsu-shi, Shiga 520-0822 (JP); KUNIKIYO, Yoshinori, Minamata-shi, Kumamoto 867-0061 (JP)
(74) Representative: HOFFMANN - EITLE
(86) International application number: JP0002628
(87) International publication number: WO0064950

(57) **Abstract**

Disclosed are an apparatus and a process for removing, at a high efficiency, unreacted monomer contained in a polymer latex having a high foaming property which apparatus comprises a cylindrical tower, one or more plates which have many small holes perforated therethrough and are provided in a vertical direction in the tower, partition walls and an overflow wall formed on each of the plates, one or more chambers formed on one or more of the plates with the plate being their bottom surface, a latex discharging port provided at the chamber formed on the lowermost plate, at least one latex introducing port provided at the chamber formed on at least one upper plate, a deaerating port provided at a position higher than the latex introducing port, a downcomer for flowing down a latex therethrough from an upper plate to a lower plate, and a steam introducing port provided below the lowermost plate, the chambers standing 3 to 300 times as high as the overflow wall, and the cross-sectional area of the tower being 50 to 1000 times as large as the total area of the small holes perforated through the plate; and which process uses the apparatus described above.

## Description

### TECHNICAL FIELD

The present invention relates to an apparatus and a process used for removing unreacted monomer from a polymer latex which is typified by a latex of a vinyl chloride polymer and contains the unreacted monomer. Further, the present invention relates an apparatus and a process for removing unreacted monomer from a polymer latex containing the unreacted monomer and then recovering the removed unreacted monomer. Specifically, the present invention relates to an apparatus and a process for removing unreacted monomer from a polymer latex which contains the unreacted monomer and is continuously supplied, by contacting steam with the polymer latex, and then recovering the removed unreacted monomer. (In the present specification and claims, the term "monomer" is intended to mean a monomer or monomers, for brevity.)

### BACKGROUND ART

Polymer latexes typified by a vinyl chloride polymer latex are usually produced by subjecting vinyl chloride monomer to an emulsion polymerization, seed emulsion polymerization, or fine suspension polymerization in the presence of a surface active agent called emulsifier, and a polymerization initiator. In the latexes after finishing of the polymerization reaction, polymers having a particle diameter of 0.1 to 10 µm exist in emulsion. The latexes are dried at a subsequent step and then supplied as powders of fine particles for such uses as coating, covering, and paste molding.

Generally for a vinyl chloride polymer latex, there is no case where polymerization reaction is continued until monomer conversion at polymerization reaches 100 %. Accordingly, unreacted residual monomers mainly comprising vinyl chloride monomer are usually contained in the polymer latex after polymerization reaction.

It is preferable from the viewpoints of environmental sanitation and efficiency of polymer production that such unreacted monomers are removed and recovered from the latex.

Vinyl chloride polymer latex is likely to coagulate by mechanical shear or heat. Further, when unreacted monomer is recovered from a vinyl chloride polymer latex, the latex is apt to cause foaming from liquid surface, and washing away of a product sometimes occurs by the foaming. Then, addition of a defoaming agent in the latex can be conceived. However, since a product obtained by adding a defoaming agent brings about such problems that thermal stability of the product deteriorates and that the product is unsuitable for foam molding, the amount of the defoaming agent to be used must be limited to a very small amount. Thus, it was unable to fully suppress the foaming. Besides, most of the uses in which a vinyl chloride polymer latex is generally employed are those wherein unsuitability of a product particularly caused by addition of a defoaming agent is not tolerated as acceptable. Accordingly, methods are adopted heretofore in which a polymer latex is temporarily stored in an evaporator, unreacted monomer is then removed by quietly heating the latex over time, and further the removed monomer is recovered. Besides, Laid-open Japanese Patent Publication No. Hei 8-325321 discloses a method in which unreacted monomer is evaporated while foaming of a latex being repressed by supplying the latex through a nozzle, when a vinyl chloride polymer latex having a high foaming property is supplied to an evaporator. In this method, however, removal efficiency of the monomer is by no means high, and thus it was necessary to spend a great deal of time or to repeat the same step again and again, for reducing the amount of unreacted monomer remaining after the treatment down to a level at which no problem is presented. Accordingly, an apparatus and a process for continuously and efficiently removing unreacted monomer from a latex which is likely to coagulate by mechanical shear or heat has been long-awaited.

### DISCLOSURE OF THE INVENTION

An object of the present invention is to provide an apparatus and a process for removing unreacted monomer from a latex typified by a vinyl chloride polymer latex and containing the unreacted monomer, at a high efficiency without coagulation of the latex. Another object of the present invention is to provide a process for recovering unreacted monomer from the latex.

An apparatus and a process of the present invention are summarized as follows:
(1) An apparatus for removing unreacted monomer from a polymer latex containing the unreacted monomer which apparatus comprising
   a cylindrical tower,
   one or more plates which have many small holes perforated therethrough and are provided in a vertical direction in the tower,
   partition walls and an overflow wall formed on each of the plates,
   one or more chambers formed on one or more of the plates with the plate being their bottom surface,
   a latex discharging port provided at one of the chambers at the very least,
   at least one latex introducing port provided at a position higher than the latex discharging port,
   a deaerating port provided at a position higher than the latex introducing port and connected to a pressure reducing pump provided outside the tower to reduce the pressure in the tower, and
   a steam introducing port provided below the plate which forms the bottom surface of the chamber at which the latex discharging port is provided,
   the chambers standing 3 to 300 times as high as the overflow wall, and the cross-sectional area of the tower at the position where any one of the plates is provided being 50 to 1000 times as large as the total area of the small holes perforated through the plate.
(2) The apparatus recited in (1) above wherein the tower comprises two or more plates; a latex discharging port provided at the chamber formed on the lowermost plate; at least one latex introducing port provided at the chamber formed on at least one of the plates at a position higher than the lowermost plate; and a downcomer (overflow pipe) for flowing down a latex therethrough from an upper plate to a lower plate.
(3) The apparatus recited in (1) above wherein the number of the plate provided in the tower is 1 to 4.
(4) The apparatus recited in (1) above wherein the total of the height of the overflow walls formed on each of the plates is 25 to 1500 mm.
(5) The apparatus recited in (1) above wherein defoaming means is provided between the deaerating port and the pressure reducing pump, and/or inside the tower.
(6) The apparatus recited in (5) above wherein the defoaming means is a device for adding a liquid containing a defoaming agent, steam ejecting device, foam crushing blade, defoaming plate, or cyclone.
(7) The apparatus recited in (5) above wherein the apparatus further comprises a line for introducing a defoamed latex from the defoaming means into the tower again.
(8) The apparatus recited in (1) above wherein the apparatus further comprises a latex discharging pipe connected to the latex discharging port, the latex discharging pipe having a liquid sealing portion.
(9) The apparatus recited in (8) above wherein the apparatus further comprises a latex withdrawing tank connected to the latex discharging port through the latex discharging pipe.
(10) The apparatus recited in (8) above wherein the cross-sectional area of the latex discharging pipe is 1/10 to 1/1000 of the cross-sectional area of the tower, and the total length of the liquid sealing portion is 500 to 5000 mm.
(11) The apparatus recited in (10) above wherein at least a part of the liquid sealing portion is formed by a U-shape sealing pipe.
(12) The apparatus recited in (11) above wherein another part of the liquid sealing portion is arranged such that the exit of the latex discharging pipe is positioned below the liquid surface of the latex stored in the latex withdrawing tank.
(13) The apparatus recited in (5) above wherein the defoaming means is provided between the uppermost plate in the tower and the deaerating port.
(14) A process for removing unreacted monomer from a polymer latex containing the unreacted monomer which process comprises using an apparatus comprising
   a cylindrical tower,
   one or more plates which have many small holes perforated therethrough and are provided in a vertical direction in the tower,
   partition walls and an overflow wall formed on each of the plates,
   one or more chambers formed on one or more of the plates with the plate being their bottom surface,
   a latex discharging port provided at one of the chambers at the very least,
   at least one latex introducing port provided at a position higher than the latex discharging port,
   a deaerating port provided at a position higher than the latex introducing port and connected to a pressure reducing pump provided outside the tower to reduce the pressure in the tower, and
   a steam introducing port provided below the plate which forms the bottom surface of the chamber at which the latex discharging port is provided,
   the chambers standing 3 to 300 times as high as the overflow wall, and the cross-sectional area of the tower at the position where any one of the plates is provided being 50 to 1000 times as large as the total area of the small holes perforated through the plate,
      and operating the apparatus under the conditions that the pressure in the chamber in which the latex is introduced is 0.04 to 0.07 MPa and that the total depth of the latex on each of the plates is 25 to 1500 mm.
(15) The process recited in (14) above wherein the apparatus is operated under the condition that the temperature of the latex flowing on the plate positioned directly above the chamber at which the steam introducing port is provided is 30 to 90°C.
(16) The process recited in (14) above wherein the apparatus is operated under the condition that the linear velocity of the steam passing through the small holes perforated through the plate which forms the bottom surface of the chamber at which the latex discharging port is provided is 10 to 100 m/sec.
(17) The process recited in (14) above wherein the apparatus further comprises a latex discharging pipe connected to the latex discharging port, and the apparatus is operated under the condition that the flow speed of the latex in the latex discharging pipe is 0.01 to 5 m/sec.

### BRIEF DESCRIPTION OF THE DRAWINGS

Fig. 1 is a diagrammatical drawing showing a vertical cross-section of an embodiment of the apparatus of the present invention used for removing unreacted monomer from a polymer latex.
Fig. 2 is a diagrammatical drawing showing the plane surface of a plate provided in the cylindrical tower in the apparatus shown in Fig. 1; and partition walls 19 and overflow wall 20 are formed on the plate 13 in Fig. 2.

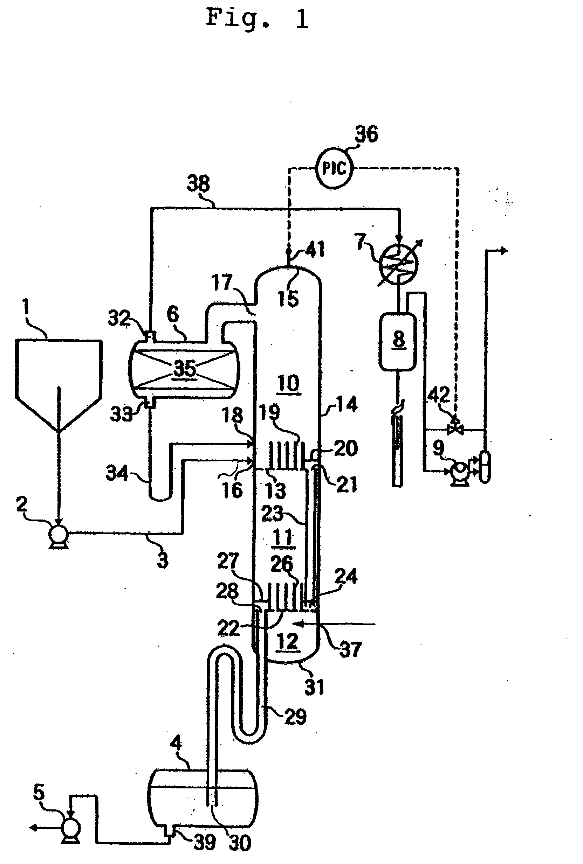

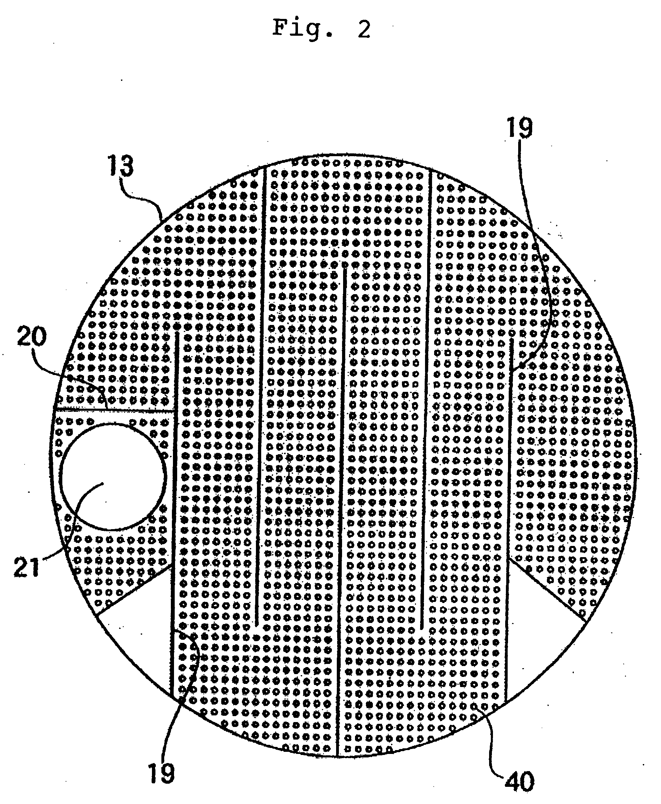

Referential numerals used in Figs. 1 and 2 indicate the portions described below, respectively:
1: a latex supplying tank, 2: a latex supplying pump, 3: a latex supplying pipe, 4: a latex withdrawing tank, 5: a latex discharging pump, 6: a defoaming tank, 7: a condenser, 8: a tank for separating condensed water, 9: a vacuum pump, 10: a latex introducing chamber, 11: a latex discharging chamber, 12: a steam introducing chamber, 13: a plate, 14: a monomer removing tower (cylindrical tower), 15: the top portion of the tower, 16: a latex introducing port, 17: a deaerating port, 18: a latex refluxing port, 19: partition walls, 20: an overflow wall, 21: the inlet of a downcomer, 22: another plate, 23: a downcomer, 24: the exit of a downcomer, 26: another partition wall, 27: another overflow wall, 28: a latex discharging port, 29: a latex discharging pipe (comprising a U-shape sealing pipe as a part thereof), 30: the exit of a latex discharging pipe, 31: the bottom portion of the tower, 32: another deaerating port, 33: a liquid discharging port, 34: a refluxing pipe, 35: a defoaming plate, 36: a device for controlling the pressure in the monomer removing tower, 37: a steam introducing port, 38: a piping for deaeration, 39: the exit of a latex withdrawing tank, 40: a small hole perforated through the plate, 41: a device for detecting the pressure at the tower top portion, 42: a valve for controlling the pressure at the tower top portion.

### BEST MODE FOR CARRYING OUT THE INVENTION

While the apparatus of the present invention can be applied for removing unreacted monomer from a polymer latex obtained by, for example, an emulsion polymerization, seed emulsion polymerization, and fine suspension polymerization, the apparatus is hereinafter described, as a typical example, with respect to a case where unreacted monomer is removed from a latex of a polyvinyl chloride (PVC) obtained by an emulsion polymerization from vinyl chloride monomer.

First, the apparatus of the present invention is described with reference to Fig. 1.

Fig. 1 shows a vertical cross-section of an embodiment of the apparatus of the present invention used for removing unreacted monomer from a polymer latex. This apparatus is principally composed of
cylindrical tower 14,
two plates 13 and 22 both of which have many small holes perforated therethrough and are provided in a vertical direction in the tower 14,
three chambers, that is, latex introducing chamber 10, latex discharging chamber 11, and steam introducing chamber 12 each of which is formed on the plate or the bottom portion of the tower with the plate or the bottom portion being their bottom surface,
latex introducing port 16 provided at the latex introducing chamber 10,
downcomer (portion for flowing down liquid) 23 provided between the plates so as to flow down a latex from the plate of an upper chamber to the plate of a lower chamber in turn,
latex discharging port 28 provided at the latex discharging chamber 11,
steam introducing port 37 provided at the steam introducing chamber 12 located at the bottom part of the tower,
latex discharging pipe 29 (comprising a U-shape sealing pipe as a part thereof) provided so as to perforate through the bottom of the tower 14, and
latex withdrawing tank 4 connected to the latex discharging pipe 29.

In the "steam introducing chamber", a plate is not necessary to be provided at its bottom. As shown in Fig. 1, deaerating port 17 is provided at the wall of the tower at a position which is higher than latex introducing port 16 and located at the upper part of latex introducing chamber 10, and the deaerating port is connected to defoaming tank 6. As will be seen from Fig. 1 with reference to Fig. 2, each of plates 13 and 22 has many small perforated holes 40, and partition walls 19 and 26 are formed on each of the plates, respectively. Partition walls are arranged on each of the plates so that a latex introduced or flowed down forms on each of the plates a meandering (or zigzag) flow passage partitioned with the partition walls and interior wall of the tower. Latex introducing port 16 is connected to latex supplying tank 1 through latex supplying pipe 3 and pump 2.

Defoaming tank 6 has defoaming plate 35 as an example of defoaming means therein, deaerating port 32 at its top portion, and liquid discharging port 33 at its bottom portion. The liquid discharging port 33 is connected to latex introducing chamber 10 in the tower through refluxing pipe 34 and refluxing port 18. Further, deaerating port 32 of defoaming tank 6 is connected to vacuum pump 9 through piping 38, condenser 7, and condensed water separating tank 8.

Overflow wall 27 is formed on plate 22 of latex discharging chamber 11, and it is arranged so that the latex overflowed from the overflow wall 27 flows down by a predetermined rate to latex withdrawing tank 4 from latex discharging port 28 through latex discharging pipe 29 (comprising a U-shape sealing pipe as its part). Total of the height of overflow walls formed on each of the plates (in other words, the total of the depth of the latex on each of the plates) is preferably 25 to 1500 mm, more preferably 50 to 1400 mm, and desirably 100 to 1000 mm in particular. When the total is less than 25 mm, it is difficult to maintain a uniform depth of latex all over the surface of the plate. As the result, at a place where the depth of latex produced on a plate is small, a large quantity of steam passes through small perforated holes of the plate from a lower chamber to an upper chamber both of which are formed with the plate being provided therebetween, since a resistance to the flow of steam caused by the layer of latex is small when steam passes through the latex layer. However, at a place where the depth of latex on a plate is large, the amount of steam passed through the small perforated holes reduces since the resistance caused by the layer of latex is large when steam passes through the latex layer. Accordingly, at a place where the depth of latex on a plate is large, the balance between the stream of steam rising through the small holes and the stream of latex tending to flow down through the small holes is lost, and the latex becomes liable to flow down through the small holes at the place to cause liquid leakage to a lower chamber. On the other hand, when the total is larger than 1500 mm, the resistance with which the steam meets when it passes through the small holes of a plate and the latex layer is excessively large. Accordingly, it is necessary to produce a large pressure difference between upper and lower chambers having the plate provided therebetween in order to exceed the resistance and to maintain passage of steam in an amount sufficient to effect contact with the latex in cross current desired in the present invention. As the result, temperature difference between an upper chamber and a lower chamber having a plate therebetween becomes large from the relation between saturated vapor pressure and temperature of steam, and it tends to deviate from a temperature range suitable for the latex treatment. Reference numeral 30 indicates the exit of a latex discharging pipe. Although not shown in the Figures, a vacuum pump, alternatively, a piping connecting to a latex discharging chamber in the tower, and valves are provided above latex withdrawing tank 4. While the pressure in the latex withdrawing tank is controlled lower than atmospheric pressure by using the vacuum pump, piping, and valves when required, it is maintained at about the same as or lower than the pressure in the latex discharging chamber in principle. When the pressure in the tank is in the range wherein liquid seal of 500 to 5000 mm long is maintained in the latex discharging pipe, the pressure is not necessary to be precisely controlled. Besides, exit 39 is provided at the bottom of latex withdrawing tank 4 so that a latex can be withdrawn with latex discharging pump 5.

While being connected to the top portion 15 of the tower, pressure detecting device 41 and pressure control device 36 are provided, and the pressure in the tower is maintained at a predetermined value by adjustment of valve 42 of a by-passing pipe which connects a main pipe between before and behind vacuum pump 9.

In the Figures, 19 and 26 indicate partition walls, 20: an overflow wall, 21: the inlet of a downcomer, 23: a downcomer, and 24: the exit of a downcomer.

Apparatus of the present invention can easily be produced by assembling units each having a plate, for example, plate 13 or 22 into the apparatus.

In the apparatus shown in Fig. 1, a PVC latex is introduced from PVC latex supplying tank 1 to latex introducing chamber 10 in the tower through latex supplying pipe 3 and latex introducing port 16 at a predetermined flow rate by using transfer means such as pump 2.

Flow rate of a PVC latex introduced within the tower 14 is usually 0.01 to 100 m³/h, and preferably 0.1 to 10 m³/h per 1 m² of area of plate 13 shown in Fig. 2. PVC latex introduced in the tower 14 is preferably preheated. When the latex is preheated, removal efficiency of unreacted monomer is increased.

In general, most of unreacted vinyl chloride monomer in a PVC latex is evaporated in a latex introducing chamber. Accordingly, when compared with each of other chambers, foaming (bubbling) in latex introducing chamber is remarkable. Accordingly, defoaming plate 35 in defoaming tank 6 connected to deaerating port 17 is used to prevent foams (bubbles) generated in the latex introducing chamber from entering into condensed water separating tank 8 and vacuum pump 9.

Defoaming means may be provided inside the tower, for instance, between the uppermost plate and a deaerating port, and even in this case, the entry of the foams into the condensed water separating tank and the vacuum pump can be prevented.

Whereas a defoaming plate is shown as defoaming means in Fig. 1, the defoaming means may be a device for adding a liquid containing a defoaming agent, steam ejecting device, cyclone, or foam crushing blade. Besides, while two plates are provided in the tower of the apparatus shown in Fig. 1, the number of plate is preferably 1 to 4 and desirably 2 to 4 in particular. When the number of plate is 5 or more, the resistance with which the steam meets when it passes through the small holes perforated each of the plates, a liquid layer of a latex on each of the plates, and a foam layer of the latex tend to become excessively large. In order to exceed the resistance and to maintain passage of steam in an amount sufficient to effect contact with the latex in cross current desired in the present invention, it is necessary to produce a large pressure difference between a steam introducing chamber and a latex introducing chamber as partly described above. As the result, temperature difference between the steam introducing chamber and latex introducing chamber becomes large from the relation between saturated vapor pressure and temperature of steam, and it tends to deviate from a temperature range suitable for the latex treatment.

When the temperature of a PVC latex introduced in the tower is high, removal efficiency of unreacted monomer is increased but such problems as coagulation of latex and others will arise. Accordingly, the temperature of the latex is necessary to be properly adjusted. Temperature of a latex flowing on the plate directly above the chamber at which a steam introducing port is provided in particular is adjusted usually at 30 to 90°C, preferably 40 to 80°C, and more desirably 40 to 75°C in the case of a PVC latex. Temperature of a latex on a plate can be adjusted by the temperature and amount of steam to be blown from a lower part, and the pressure in tower 14. Pressure within tower 14, particularly that in the chamber in which a latex is introduced is preferably adjusted in the range of 0.004 to 0.07 MPa.

Plates 13 and 22 are provided in tower 14 and have several partition walls 19 and 26 formed in vertical direction on one side thereof, respectively. The plates also have many holes, and the holes are perforated so that a latex contacts with steam at a high efficiency when it flows on the plate while being stirred with the steam blown through the small holes, and unreacted monomer is removed. Linear velocity of the steam passing through the small holes is preferably 10 to 100 m/sec. When the velocity is smaller than a predetermined one, stir of a latex on a plate is insufficient, PVC particles settle, contact of steam with the latex is insufficient, and unreacted monomer in the latex can not efficiently be removed. When linear velocity of steam is still smaller, a situation where a PVC latex leaks from plates occurs. In the case where the chamber below a plate is a steam introducing chamber, a situation where a latex is accumulated in the steam introducing chamber occurs and the properties of the latex is changed by the contact with steam for many hours. Besides, when a latex was leaked from an upper plate to a lower plate, monomer removal efficiency is remarkably reduced since the latex staying on the upper plate and containing a larger amount of monomer than the latex staying on the lower plate mixes with the latex staying on the lower plate.

Conversely, when the linear velocity of steam is higher than a predetermined one, a PVC latex is thrown up by the steam blown in through the small holes to cause the entrainment, and operation of the apparatus becomes difficult.

While the diameter of the small holes can satisfactorily selected in the range of 0.5 to 5 mm, it is necessary that the total area of the small holes formed in one plate which serves as bottom surface of a chamber (hereinafter, the total area of the small holes is sometimes referred to as "small hole total area") is selected to be 1/50 to 1/100 of the cross-sectional area of the tower at the position where the plate is provided (hereinafter the cross-sectional area of the tower is sometimes referred to as "tower cross-sectional area). In other words, tower cross-sectional area/small hole total area must be 50 to 1000.

When the small hole total area is larger than a predetermined ratio, an excess amount of steam is necessary to maintain the linear velocity of the steam passing through the small holes at a proper range. When an excess amount of steam was introduced in the tower, vigorous foaming of a latex occurs, superficial linear velocity of steam in the tower is increased, the space in the tower is filled with foams generated by the contact of a latex with steam and further unreacted monomer, and control of the pressure in the tower becomes difficult, and thus operation of the apparatus comes to be impossible.

Conversely, when the small hole total area is smaller than a predetermined ratio, PVC particles in a PVC latex settle, contact of steam with a latex is insufficient, and thus unreacted monomer in a latex can not efficiently be removed.

Partition walls 19 and 26 are to secure on a plate treating passages through which a PVC latex can flow. Overflow walls 20 and 27 are to maintain a certain amount of a PVC latex on a plate. With these walls, a PVC latex flows on a plate for a fixed time period and subjected to a treatment with steam for removing unreacted monomer during that time.

Fig. 2 shows the plane view of a plate, specifically plate 13 on which partition walls 19 and overflow wall 20 are formed.

Latex maintained at a certain depth with an overflow wall on a plate is stirred by the steam blown in through the small holes to contact with the steam at a high efficiency, and thereby unreacted monomer is efficiently removed from the latex.

Height of a chamber formed on a plate with the plate being its bottom surface is 3 to 300 times and preferably 5 to 200 times as high as the overflow wall. By setting the height of the chamber at 3 to 300 times as high as the overflow wall, a height necessary for sufficiently maintaining foams in the chamber can be secured. Thus, a situation can be avoided where a chamber is completely filled with a foamed latex, the foamed latex offers a resistance to the flow of the steam to be passed through the small holes of an upper plate, control of the pressure is precluded, the temperature in the tower increases up to one higher than a predetermined operating temperature, and thus operation of the apparatus becomes impossible. Further, by setting the height of a latex introducing chamber to a sufficiently large value, a situation where a large quantity of foams are discharged from a deaerating port provided at an upper portion of the latex introducing chamber can be avoided. When the height of a chamber exceeds 300 times as high as an overflow wall, only about the same effect as in the case where the ratio of height of chamber/height of overflow wall is 3 to 300 in spite of increase in production cost of the apparatus.

In this connection, the lapse of time in which foams are generated and then vanished in a chamber is as follows:
① Foams or bubbles are generated by the steam blown in the chamber through small holes in a plate.
② The foams or bubbles rise in a certain depth of a liquid formed by an overflow wall, reach at a position higher than the top of the overflow wall, and form spherical foams containing a large quantity of a latex.
③ As the spherical foams rise in the tower, a part of the latex which forms the outside wall of the foams fall off the foams by liquid gravity to form larger foams.
④ Further, in the upper portion of the chamber, walls of the foams become considerably thin and soon after, the walls are burst to make the foams vanish.

When the height of a chamber is smaller than 3 times as high as the overflow wall, a chamber below a latex introducing chamber is completely filled with a latex foamed with steam, this latex offers a resistance to the flow of the steam to be passed through small holes in a plate provided at a higher position to prevent the pressure control, the temperature in the tower increases to a temperature higher than predetermined one, and thus operation of the apparatus becomes impossible.

When the height of a latex introducing chamber is not sufficient, a situation where a large quantity of foams are discharged from a deaerating port provided at an upper portion of the chamber occurs. While a deaerating port is provided at a position higher than a latex introducing port and at an upper portion of a latex introducing chamber, it is sufficient that a deaerating port is provided at a position where a large quantity of the foams generated in a latex introducing chamber do not discharged from the deaerating port. Accordingly, the position of a deaerating port is not specifically limited.

Shape of treating passages is decided by a method in which partition walls 19 and 26 are formed. Shape of the passages is desirably a meandering (or zigzag) form, and a spiral form, arrow wheel form, and star form (radial) can be selected as other shapes.

Apparatus of the present invention comprises steam introducing chamber 12 at its bottom portion, and steam introducing port 37 is provided at the steam introducing chamber. Steam introduced through steam introducing port 37 is blown in a PVC latex which flows on each of the plates through small holes of the plate.

In the apparatus of the present invention, a device for washing the inside the tower, particularly the lower surface of a plate, with hot water may be provided.

PVC latex is supplied from latex supplying tank 1 into tower 14 through latex introducing port 16 with pump 2. The latex supplied in the tower contacts during the time that the latex flows on plates 13 and 22 of latex introducing chamber 10 and latex discharging chamber 11, respectively, with the steam introduced through steam introducing port 37 provided at a bottom portion of the tower at a high efficiency in cross current while being stirred on a plate, and thus unreacted monomer is efficiently removed from the latex. The latex from which unreacted monomer was removed is flowed down from latex discharging port 28, passed through latex discharging pipe 29 (comprising a U-shape sealing pipe as its part), discharged from exit 30 of the latex discharging pipe into latex withdrawing tank 4, and then temporarily stored in the tank 4. U-shape sealing pipe stores the latex at its U-shape portion to form liquid sealing portion. Besides, a different and additional liquid sealing portion may be formed by arranging the latex discharging pipe and latex withdrawing tank such that exit 30 of the latex discharging pipe is positioned below the liquid surface of the latex stored in latex withdrawing tank 4 as shown in Fig. 1. Principal role of these liquid sealing portions is to avoid a situation where steam enters in latex withdrawing tank 4 through the latex discharging pipe. When the cross-sectional area of the latex discharging pipe is adjusted to 1/100 to 1/1000 and preferably 1/100 to 1/500 of the cross-sectional area of the tower, and the total length of the liquid sealing portion is adjusted to 500 to 5000 mm, it is possible to prevent the foams mixed in a latex on a plate from being discharged in a latex withdrawing tank with the foams being entrained in the latex. Thus, a latex can stably be discharged at a constant flow rate.

When the cross-sectional area of a latex discharging pipe exceeds 1/100 of the cross-sectional area of the tower, flow speed of a latex in the latex discharging pipe is slow and settling of PVC particles is likely to be caused.

When the former is smaller than 1/000 of the latter, flow speed of a latex is excessively high and a sufficient separation of foams from a latex sometimes becomes difficult. The apparatus is preferably operated under the condition that flow speed of a latex in a latex discharging pipe is in the range of 0.01 to 5 m/sec.

Further, since apparent specific gravity of a latex is varied with the amount of foams existing in the latex, when the length of a liquid sealing portion is shorter than 500 mm, a sufficient liquid sealing effect can not be obtained, foams in a latex come to easily enter in latex withdrawing tank 4 through the liquid sealing portion, and the variation in pressure in the tower is sometimes caused. When the length of a liquid sealing portion exceeds 5000 mm, liquid sealing becomes excessive and it offers no advantage. In this connection, when a U-shape liquid sealing pipe is used as a part of a latex discharging pipe, the term "the length of a liquid sealing portion formed by a U-shape liquid sealing pipe" as used in this specification is intended to mean the distance from the bottom portion to the top portion of the U-shape portion (in other words, height of the U-shape portion).

Latex withdrawn in a latex withdrawing tank is discharged outside from exit 39 with pump 5.

Since it is possible to prevent steam from being discharged outside the tower through a latex discharging pipe with the liquid sealing portion described above, the amount of steam supplied to a latex on a plate becomes constant and removal of monomer is stably conducted. As a result, leak of a latex from small holes of a plate due to a reduction in linear velocity of steam passing through the small holes caused by temporary variation in the amount of steam can be avoided.

Monomer gas removed in the tower is introduced in defoaming tank 6 through deaerating port 17, defoamed with defoaming plate 35, passed through piping for deaeration 38, cooled with condenser 7, and then supplied to condensed water supplying tank 8. Condensed water is separated from gas in this condensed water separating tank, remaining gas is removed to a step for liquefaction and recovery of gas through vacuum pump 9, and the monomer recovered in this step is recycled to a vinyl chloride polymerization step. In this connection, when a large quantity of vinyl chloride monomer is contained in a condensed water, the condensed water may be introduced in the tower again to conduct monomer recovery. When the apparatus and process of the present invention are used, it is possible to efficiently reduce the concentration of unreacted residual monomer particularly in a vinyl chloride polymer latex down to a level of about 10 ppm. When considered the fact that efficient reduction of unreacted residual monomer down to even an extent of 1000 ppm was difficult according to conventional apparatuses and methods, the apparatus and process of the present invention are extremely useful in these days and future in which environmental standards are strictly controlled.

Now, the present invention will be described in more detail with reference to Examples and Comparative Examples. However, it should be understood that the scope of the present invention is by no means restricted by such specific Examples and Comparative Examples. In the following Examples and Comparative Examples, concentration of residual monomer and particle diameter were determined by the following methods:

### (1) Method for determining concentration of residual monomer in polymer latex after treatment for removing unreacted monomer:

A polymer latex immediately after a treatment for removing residual monomer was sampled from a latex discharging pipe, the concentration of residual vinyl chloride monomer in the latex was determined by Head Space method using a gas chromatograph 9A (trade name) produced by Shimadzu Corp., and the concentration of residual monomer per resin component was calculated from the concentration of residual vinyl chloride monomer and the concentration of a resin component in the latex determined in a separate step. Determination of monomer concentration in a latex supplied was conducted by sampling a latex from the exit of a latex supplying pump and repeating the same procedures as described above.

Determination conditions were in accordance with those of ASTM D4443, and FID was used for the detecting section.

### (2) Method for determining average particle diameter of polymer:

Average diameter of polymer particles in a latex was obtained by using a device for determining particle diameter distribution of laser diffraction/diffusion type (trade name: LA-910) produced by Horiba, Ltd.

### Example 1

Vinyl chloride was polymerized by a fine suspension polymerization. Subsequently, a vinyl chloride polymer latex in which polymerization reaction was terminated was removed to a blow-down tank and then removed to latex supplying tank 1 shown in Fig. 1.

Latex in latex supplying tank 1 contained 50.0 % by weight of water, 48.5 % by weight of solids mainly comprising vinyl chloride polymer, and 1.5 % by weight of unreacted vinyl chloride monomer. Average diameter of the vinyl chloride polymer particles was 0.9 µm. This polymer latex was supplied to such an apparatus as shown in Fig. 1 to remove unreacted monomer from the polymer latex.

Specifications and operating conditions of the apparatus were as follows:

### (1) Specifications of apparatus

① Inside diameter of tower 14 for removing monomer (diameter of plate): 300 mm
② Number of plates: 2
③ Height of latex introducing chamber 10: 4000 mm
④ Height of latex discharging chamber 11: 3000 mm
⑤ Height of overflow wall 20 formed on plate 13 of the latex introducing chamber: 300 mm
⑥ Height of overflow wall 27 formed on plate 22 of the latex discharging chamber: 300 mm
⑦ Defoaming means: Defoaming plate 35
⑧ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑨ Position of exit 30 of latex discharging pipe: 2000 mm below the liquid surface of the latex in latex withdrawing tank 4

### (2) Operating conditions and operation

① Pressure in the chamber in which a latex is introduced in the monomer removing tower: 0.016 MPa
② amount of steam to be introduced in the steam introducing chamber: 5 kg/hr
③ Amount of a polymer latex to be supplied in the latex introducing chamber: 60 kg/hr
④ Linear velocity of steam passing through small holes of plate 22 of the latex discharging chamber: 43 m/sec
⑤ Total liquid depth of the latex on plates 13 and 22: 600 mm
⑥ Temperature of the latex on a plate directly above steam introducing chamber 12 (plate 22 of the latex discharging chamber): 58°C
⑦ Flow speed of the latex in the latex discharging pipe: 4.6 cm/sec

After working of vacuum pump 9 was started and the pressure in the tower was adjusted to 0.016 MPa, steam was supplied in monomer removing tower 14 at a flow rate of 5 kg/hr. Also, hot water was supplied in the tower to preheat the tower. After the pressure in the tower and flow rate of the steam were stabilized at a predetermined set values, a latex was introduced in the tower from latex introducing tank 1 through latex introducing port 16 with pump 2. After having passed treating passages on plate 13, the latex was flowed down on plate 22 through downcomer 23, further passed through treating passages on plate 22, and then withdrawn in latex withdrawing tank 4 through latex discharging pipe 29. Latex discharging pipe 29 was arranged so that exit 30 of the latex discharging pipe was positioned at 2000 mm below the liquid surface of the latex in latex withdrawing tank 4.

### (3) State of operation

State of the monomer removing apparatus during operation was as follows:
① Temperature in latex discharging chamber 11 was stably maintained at a predetermined set value.
② Mixing of the polymer latex into the condensed water discharged from condensed water separating tank 8 did not occur.
③ Polymer latex did not enter in vacuum pump 9.
④ Pressure in the monomer removing tower was stable without variations.
⑤ Leak of the polymer latex from small holes of plate 13 of latex introducing chamber 10 did not occur.
⑥ Latex was continuously discharged from latex discharging chamber 11 to latex withdrawing tank 4 at a stable flow rate.
⑦ Apparatus was able to smoothly operate continuously for 30 days (in this connection, while operation over 30 days was possible, it was terminated for observation of the inside of the tower).

### (4) Quality of latex after monomer removal

Average diameter of polymer particles in the polymer latex discharged from latex withdrawing tank 4 with latex discharging pump 5 was 0.9 µm without changing between before and after the monomer removing treatment. Coagula did not exist in the latex. Concentration of residual vinyl chloride monomer was 200 ppm on resin base.

After termination of the operation, the inside of latex discharging chamber 11 was observed to find that scales such as coagula of a latex polymer did not exist on plate 22 and that interior wall of the tower remained its metallic luster.

### Example 2

Latex used in Example 1 was treated in such an apparatus as shown in Fig. 1 in the same operational procedures as in the Example under the following apparatus specifications and operating conditions:

### (1) Specifications of apparatus

① Inside diameter of tower 14 for removing monomer (diameter of plate): 300 mm
② Number of plates: 2
③ Height of latex introducing chamber 10: 4000 mm
④ Height of latex discharging chamber 11: 3000 mm
⑤ Height of overflow wall 20 formed on plate 13 of the latex introducing chamber: 200 mm
⑥ Height of overflow wall 27 formed on plate 22 of the latex discharging chamber: 200 mm
⑦ Defoaming means: None
⑧ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑨ Position of exit 30 of the latex discharging pipe: 2000 mm below the liquid surface of the latex in latex withdrawing tank 4

### (2) Operating conditions

① Pressure in the chamber in which a latex is introduced in the monomer removing tower: 0.016 MPa
② Amount of steam to be introduced in the steam introducing chamber: 5 kg/hr
③ Amount of a polymer latex to be supplied in the latex introducing chamber: 60 kg/hr
④ Linear velocity of steam passing through small holes of plate 22 of the latex discharging chamber: 43 m/sec
⑤ Total liquid depth of the latex on plates 13 and 22: 400 mm
⑥ Temperature of the latex on a plate directly above steam introducing chamber 12 (plate 22 of the latex discharging chamber): 57°C
⑦ Flow speed of the latex in the latex discharging pipe: 4.6 cm/sec

### (3) State of operation

State of the monomer removing apparatus during operation was as follows:
① Leak of the polymer latex from small holes of plate 13 of the latex introducing chamber into latex discharging chamber 11 did not occur.
② Latex was continuously discharged from latex discharging chamber 11 to latex withdrawing tank 4 at a stable flow rate.
③ However, mixing of the polymer latex into the condensed water discharged from condensed water separating tank 8 was noticed.
④ Whereas the polymer latex entered in vacuum pump 9 and a phenomenon in which working of the vacuum pump came to be in a bad condition was noticed, continuous operation for 24 hours was possible.

### (4) Quality of latex after monomer removal

Average diameter of polymer particles in the polymer latex discharged from latex withdrawing tank 4 with latex discharging pump 5 was 0.9 µm without changing between before and after the monomer removing treatment. Coagula did not exist in the latex. Concentration of residual vinyl chloride monomer was 350 ppm on resin base.

After termination of the operation, the inside of latex discharging chamber 11 was observed to find that coagula of a latex polymer did not exit on plate 22 and that interior wall of the tower remained its metallic luster.

### Example 3

Latex used in Example 1 was treated in an apparatus similar to that shown in Fig. 1 with the exception that the number of plates is 3, in the same operational procedures as in Example 1 under the following apparatus specifications and operating conditions:

### (1) Specifications of apparatus

① Inside diameter of tower 14 for removing monomer (diameter of plate): 300 mm
② Number of plates: 3
③ Height of latex introducing chamber 10: 3000 mm
④ Height of the chamber located between the latex introducing chamber and the latex discharging chamber: 2000 mm
⑤ Height of latex discharging chamber 11: 2000 mm
⑥ Height of overflow wall 20 formed on plate 13 of the latex introducing chamber: 100 mm
⑦ Height of overflow wall formed on the plate of the chamber located between the latex introducing chamber and the latex discharging chamber: 100 mm
⑧ Height of overflow wall 27 formed on plate 22 of the latex discharging chamber: 100 mm
⑨ Defoaming means: Defoaming plate 35
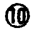 Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
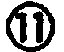 Position of exit 30 of the latex discharging pipe: 2000 mm below the liquid surface of the latex in latex withdrawing tank 4

### (2) Operating conditions

① Pressure in the chamber in which a latex is introduced in the monomer removing tower: 0.016 MPa
② Amount of steam to be introduced in the steam introducing chamber: 5 kg/hr
③ Amount of a polymer latex to be supplied in the latex introducing chamber: 60 kg/hr
④ Linear velocity of steam passing through small holes of plate 22 of the latex discharging chamber: 43 m/sec
⑤ Total liquid depth of the latex on plates (3 plates): 300 mm
⑥ Temperature of the latex on a plate directly above a steam introducing chamber (plate 22 of the latex discharging chamber): 60°C
⑦ Flow speed of the latex in the latex discharging pipe: 4.6 cm/sec

### (3) State of operation

State of the monomer removing apparatus during operation was as follows:
① Temperature in latex discharging chamber 11 was stably maintained at a predetermined set value.
② Mixing of the polymer latex into the condensed water discharged from condensed water separating tank 8 did not occur.
③ Polymer latex did not enter in vacuum pump 9.
④ Pressure in the monomer removing tower was stable without variations.
⑤ Leak of the polymer latex from small holes of plate 13 of latex introducing chamber 10 did not occur.
⑥ Latex was continuously discharged from latex discharging chamber 11 to latex withdrawing tank 4 at a stable flow rate.
⑦ Apparatus was able to smoothly operate continuously for 30 days (in this connection, while operation over 30 days was possible, it was terminated for observation of the inside of the tower).

### (4) Quality of latex after monomer removal

Average diameter of polymer particles in the polymer latex discharged from latex withdrawing tank 4 with latex discharging pump 5 was 0.9 µm without changing between before and after the monomer removing treatment. Coagula did not exist in the latex. Concentration of residual vinyl chloride monomer was 20 ppm on resin base.

After termination of the operation, the inside of latex discharging chamber 11 was observed to find that scales such as coagula of a latex polymer did not exit on plate 22 and that interior wall of the tower remained its metallic luster.

### Example 4

Latex used in Example 1 was treated in such an apparatus as shown in Fig. 1 in the same operational procedures as in the Example under the following apparatus specifications and operating conditions:

### (1) Specifications of apparatus

① Inside diameter of tower 14 for removing monomer (diameter of plate): 300 mm
② Number of plates: 2
③ Height of latex introducing chamber 10: 4000 mm
④ Height of latex discharging chamber 11: 3000 mm
⑤ Height of overflow wall 20 formed on plate 13 of the latex introducing chamber: 150 mm
⑥ Height of overflow wall 27 formed on plate 22 of the latex discharging chamber: 150 mm
⑦ Defoaming means: Defoaming plate 35
⑧ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑨ Position of exit 30 of the latex discharging pipe: 2000 mm below the liquid surface of the latex in latex withdrawing tank 4

### (2) Operating conditions

① Pressure in the chamber in which a latex is introduced in the monomer removing tower: 0.020 MPa
② Amount of steam to be introduced in the steam introducing chamber: 6.7 kg/hr
③ Amount of a polymer latex to be supplied in the latex introducing chamber: 60 kg/hr
④ Linear velocity of steam passing through small holes of plate 22 of the latex discharging chamber: 43 m/sec
⑤ Total liquid depth of the latex on plates 13 and 22: 300 mm
⑥ Temperature of the latex on a plate directly above steam introducing chamber 12 (plate 22 of the latex discharging chamber): 63°C
⑦ Flow speed of the latex in the latex discharging pipe: 4.6 cm/sec

### (3) State of operation

State of the monomer removing apparatus during operation was as follows:
① Temperature in latex discharging chamber 11 was stably maintained at a predetermined set value.
② Mixing of the polymer latex into the condensed water discharged from condensed water separating tank 8 did not occur.
③ Polymer latex did not enter in vacuum pump 9.
④ Pressure in the monomer removing tower was stable without variations.
⑤ Leak of the polymer latex from small holes of plate 13 of latex introducing chamber 10 did not occur.
⑥ Latex was continuously discharged from latex discharging chamber 11 to latex withdrawing tank 4 at a stable flow rate.
⑦ Apparatus was able to smoothly operate continuously for 30 days (in this connection, while operation over 30 days was possible, it was terminated for observation of the inside of the tower).

### (4) Quality of latex after monomer removal

Average diameter of polymer particles in the polymer latex discharged from latex withdrawing tank 4 with latex discharging pump 5 was 0.9 µm without changing between before and after the monomer removing treatment. Coagula did not exist in the latex. Concentration of residual vinyl chloride monomer was 30 ppm on resin base.

After termination of the operation, the inside of latex discharging chamber 11 was observed to find that scales such as coagula of a latex polymer did not exist on plate 22 and that interior wall of the tower remained its metallic luster.

### Example 5

Latex used in Example 1 was treated in an apparatus similar to that shown in Fig. 1 with the exception that the number of plate is 1, in the same operational procedures as in the Example under the following apparatus specifications and operating conditions:

### (1) Specifications of apparatus

① Inside diameter of tower 14 for removing monomer (diameter of plate): 300 mm
② Number of plate: 1
③ Height of latex introducing chamber 10: 7000 mm *Since the number of plate is 1, the latex introducing chamber also serves as the latex discharging chamber.
④ Height of overflow wall 20 formed on plate 13 of the latex introducing chamber: 150 mm
⑤ Defoaming means: None
⑥ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑦ Position of exit 30 of the latex discharging pipe: 2000 mm below the liquid surface of the latex in latex withdrawing tank 4

### (2) Operating conditions

① Pressure in the chamber in which a latex is introduced in the monomer removing tower: 0.016 MPa
② Amount of steam to be introduced in the steam introducing chamber: 5 kg/hr
③ Amount of a polymer latex to be supplied in the latex introducing chamber: 60 kg/hr
④ Linear velocity of steam passing through small holes of plate 13 of the latex discharging chamber (this chamber also serves as the latex introducing chamber): 43 m/sec
⑤ Liquid depth of the latex on plates 13: 150 mm
⑥ Temperature of the latex on the plate 13 directly above the steam introducing chamber (latex discharging chamber which also serves as the latex introducing chamber): 55°C
⑦ Flow speed of the latex in the latex discharging pipe: 4.6 cm/sec

### (3) State of operation

State of the monomer removing apparatus during operation was as follows:
① Temperature in latex discharging chamber 11 was stably maintained at a predetermined set value.
② Mixing of the polymer latex into the condensed water discharged from condensed water separating tank 8 did not occur.
③ Polymer latex did not enter in vacuum pump 9.
④ Pressure in the monomer removing tower was stable without variations.
⑤ Leak of the polymer latex from small holes of plate 13 of the latex introducing chamber did not occur.
⑥ Latex was continuously discharged from latex discharging chamber serving also as a latex introducing chamber to latex withdrawing tank 4 at a stable flow rate.
⑦ Apparatus was able to smoothly operate continuously for 30 days (in this connection, while operation over 30 days was possible, it was terminated for observation of the inside of the tower).

### (4) Quality of latex after monomer removal

Average diameter of polymer particles in the polymer latex discharged from latex withdrawing tank 4 with latex discharging pump 5 was 0.9 µm without changing between before and after the monomer removing treatment. Coagula did not exist in the latex. Concentration of residual vinyl chloride monomer was 300 ppm on resin base.

After termination of the operation, the inside of latex discharging chamber 11 was observed to find that scales such as coagula of a latex polymer did not exit on plate 22 and that interior wall of the tower remained its metallic luster.

### Comparative Example 1

Latex used in Example 1 was treated in such an apparatus as shown in Fig. 1 in the same operational procedures as in the Example under the following apparatus specifications and operating conditions:

### (1) Specifications of apparatus

① Inside diameter of tower 14 for removing monomer (diameter of plate): 300 mm
② Number of plates: 2
③ Height of latex introducing chamber 10: 2000 mm
④ Height of latex discharging chamber 11: 2000 mm
⑤ Height of overflow wall 20 formed on plate 13 of the latex introducing chamber: 1000 mm
   (Accordingly, height of chamber/height of overflow wall was 2)
⑥ Height of overflow wall 27 formed on plate 22 of the latex discharging chamber: 1000 mm
   (Accordingly, height of chamber/height of overflow wall was 2)
⑦ Defoaming means: Defoaming plate 35
⑧ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑨ Position of exit 30 of the latex discharging pipe: 2000 mm below the liquid surface of the latex in latex withdrawing tank 4

### (2) operating conditions

① Pressure in the chamber in which a latex is introduced in the monomer removing tower: 0.016 MPa
② Amount of steam to be introduced in the steam introducing chamber: 5 kg/hr
③ Amount of a polymer latex to be supplied in the latex introducing chamber: 60 kg/hr
④ Linear velocity of steam passing through small holes of plate 22 of the latex discharging chamber: 43 m/sec
⑤ Total liquid depth of the latex on plates 13 and 22: 2000 mm
⑥ Temperature of the latex on a plate directly above steam introducing chamber 12 (plate 22 of the latex discharging chamber): 59°C
⑦ Flow speed of the latex in the latex discharging pipe: 4.6 cm/sec

### (3) State of operation

State of the monomer removing apparatus during operation was as follows:
① After start of the operation, foams closely filled the latex discharging chamber.
② Forms generated in the latex introducing chamber closely filled the defoaming tank provided with a defoaming plate.
③ Temperature of the latex on plate 22 of latex discharging chamber 11 rose to 92°C.
④ Polymer latex mixed into the condensed water discharged from condensed water separating tank 8.
⑤ Polymer latex entered in vacuum pump 9.
⑥ Pressure in the monomer removing apparatus varied.
⑦ Amount of latex discharged from the latex discharging chamber to the latex withdrawing tank decreased.
⑧ An hour after the start of operation, working of vacuum pump became in bad condition.
⑨ Pressure and temperature in monomer removing tower 14 rose and operation of the apparatus became impossible.

Since a latex was not discharged to the latex withdrawing tank due to a bad operating condition of the apparatus, quality evaluation of the latex after removal of monomer was unable to perform.

After termination of the operation, the inside of latex discharging chamber 11 was observed to find that coagula of a latex polymer were deposited on plate 22 to the extent of 8 mm thickness, and interior wall of the tower was covered with a thin film of the latex.

### Comparative Example 2

Latex used in Example 1 was treated in such an apparatus as shown in Fig. 1 in the same operational procedures as in the Example under the following apparatus specifications and operating conditions:

### (1) Specifications of apparatus

① Inside diameter of tower 14 for removing monomer (diameter of plate): 300 mm
② Number of plates: 2
③ Height of latex introducing chamber 10: 4000 mm
④ Height of latex discharging chamber 11: 3000 mm
⑤ Height of overflow wall 20 formed on plate 13 of the latex introducing chamber: 300 mm
⑥ Height of overflow wall 27 formed on plate 22 of the latex discharging chamber: 300 mm
⑦ Defoaming means: Defoaming plate 35
⑧ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑨ Position of exit 30 of the latex discharging pipe: 2000 mm below the liquid surface of the latex in latex withdrawing tank 4
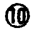 Cross-sectional area of the tower/total area of small holes in the latex introducing chamber: 48
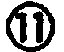 Cross-sectional area of the tower/total area of small holes in the latex discharging chamber: 41

### (2) Operating conditions

① Pressure in the chamber in which a latex is introduced in the monomer removing tower: 0.016 MPa
② Amount of steam to be introduced in the steam introducing chamber: 24.0 kg/hr
③ Amount of a polymer latex to be supplied in the latex introducing chamber: 60 kg/hr
④ Linear velocity of steam passing through small holes of plate 22 of the latex discharging chamber: 43 m/sec
⑤ Total liquid depth of the latex on plates 13 and 22: 600 mm
⑥ Temperature of the latex on a plate directly above steam introducing chamber 12 (plate 22 of the latex discharging chamber): 62°C
⑦ Flow speed of the latex in the latex discharging pipe: 4.6 cm/sec

### (3) State of operation

State of the monomer removing apparatus during operation was as follows:
① After start of the operation, foams closely filled the latex discharging chamber.
② Forms generated in the latex introducing chamber closely filled the defoaming tank.
③ Temperature of the latex on plate 22 of the latex discharging chamber 11 rose to 95°C.
④ Polymer latex mixed into the condensed water discharged from condensed water separating tank 8.
⑤ Polymer latex entered in vacuum pump 9.
⑥ Pressure in the monomer removing apparatus varied.
⑦ Amount of latex discharged from the latex discharging chamber to the latex withdrawing tank decreased.
⑧ An hour after the start of operation, working of vacuum pump became in bad condition.
⑨ Pressure and temperature in monomer removing tower 14 rose and operation of the apparatus became impossible.

Since a latex was not discharged to the latex withdrawing tank due to a bad operating condition of the apparatus, quality evaluation of the latex after removal of monomer was unable to perform.

After termination of the operation, the inside of latex discharging chamber 11 was observed to find that coagula of a latex polymer were deposited on plate 22 to the extent of 8 mm thickness, and interior wall of the tower was covered with a thin film of the latex.

### Comparative Example 3

Latex used in Example 1 was treated in such an apparatus as shown in Fig. 1 in the same operational procedures as in the Example under the following apparatus specifications and operating conditions:

### (1) Specifications of apparatus

① Inside diameter of tower 14 for removing monomer (diameter of plate): 300 mm
② Number of plates: 2
③ Height of latex introducing chamber 10: 4000 mm
④ Height of latex discharging chamber 11: 3000 mm
⑤ Height of overflow wall 20 formed on plate 13 of the latex introducing chamber: 300 mm
⑥ Height of overflow wall 27 formed on plate 22 of the latex discharging chamber: 300 mm
⑦ Defoaming means: Defoaming plate 35
⑧ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑨ Position of exit 30 of the latex discharging pipe: 2000 mm below the liquid surface of the latex in latex withdrawing tank 4
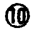 Cross-sectional area of the tower/total area of small holes in the latex introducing chamber: 1144
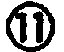 Cross-sectional area of the tower/total area of small holes in the latex discharging chamber: 1144

### (2) Operating conditions

① Pressure in the chamber in which a latex is introduced in the monomer removing tower: 0.016 MPa
② Amount of steam to be introduced in the steam introducing chamber: 1.8 kg/hr
③ Amount of a polymer latex to be supplied in the latex introducing chamber: 60 kg/hr
④ Linear velocity of steam passing through small holes of plate 22 of the latex discharging chamber: 93 m/sec
⑤ Total liquid depth of the latex on plates 13 and 22: 600 mm
⑥ Temperature of the latex on a plate directly above steam introducing chamber 12 (plate 22 of the latex discharging chamber): 57°C
⑦ Flow speed of the latex in the latex discharging pipe: 4.6 cm/sec

### (3) State of operation

State of the monomer removing apparatus during operation was as follows:
① Almost no foams generated in the latex discharging chamber.
② Forms generated in the latex introducing chamber did not closely filled the defoaming tank.
③ Polymer latex did not mix into the condensed water discharged from condensed water separating tank 8.
④ Polymer latex did not enter in vacuum pump 9.
⑤ Temperature of the latex on plate 22 of latex discharging chamber 11 rose to 71°C.
⑥ From 5 hours after start of the operation onward, the amount of the latex discharged from the latex discharging chamber gradually decreased, and 8 hours after the start of the operation, the latex became incapable of being discharged. Accordingly, the operation was terminated.

### (4) Quality of the latex after monomer removal

Average diameter of polymer particles in the polymer latex discharged from latex withdrawing tank 4 with latex discharging pump 5 was 0.9 µm without changing between before and after the monomer removing treatment. Coagula did not exist in the latex. Concentration of residual vinyl chloride monomer was 15000 ppm on resin base.

After termination of the operation, the inside of latex discharging chamber 11 was observed to find that scales such as coagula of a latex polymer existed on plate 22 in 15 mm thickness.

### Comparative Example 4

Latex used in Example 1 was treated in such an apparatus as shown in Fig. 1 in the same operational procedures as in the Example under the following apparatus specifications and operating conditions:

### (1) Specifications of apparatus

① Inside diameter of tower 14 for removing monomer (diameter of plate): 300 mm
② Number of plates: 2
③ Height of latex introducing chamber 10: 4000 mm
④ Height of latex discharging chamber 11: 3000 mm
⑤ Height of overflow wall 20 formed on plate 13 of the latex introducing chamber: 300 mm
⑥ Height of overflow wall 27 formed on plate 22 of the latex discharging chamber: 300 mm
⑦ Defoaming means: Defoaming plate 35
⑧ Latex discharging pipe 29: Pipe comprising a U-shape portion as its part. This U-shape portion forms a liquid sealing portion. Length of liquid sealing portion (from the bottom to the top of the U-shape portion) is 2000 mm and pipe diameter is 20 mm.
⑨ Position of exit 30 of the latex discharging pipe: 2000 mm below the liquid surface of the latex in latex withdrawing tank 4

### (2) Operating conditions

① Pressure in the chamber in which a latex is introduced in the monomer removing tower: 0.16 MPa
② Amount of steam to be introduced in the steam introducing chamber: 29.0 kg/hr
   (This is the amount of steam necessary to obtain the same linear speed as that of steam (43 m/sec) in small holes of the plate in the latex discharging chamber in Example 1 under a pressure of 0.1 MPa.)
③ Amount of a polymer latex to be supplied in the latex introducing chamber: 60 kg/hr
④ Linear velocity of steam passing through small holes of plate 22 of the latex discharging chamber: 43 m/sec
⑤ Total liquid depth of the latex on plates 13 and 22: 600 mm
⑥ Temperature of the latex on a plate directly above steam introducing chamber 12 (plate 22 of the latex discharging chamber): 102°C
⑦ Flow speed of the latex in the latex discharging pipe: 4.6 cm/sec

### (3) State of operation

State of the monomer removing apparatus during operation was as follows:
① After start of the operation, foams filled the latex discharging chamber.
② Forms generated in the latex introducing chamber entered in the defoaming tank.
③ Polymer latex did not mix into the condensed water discharged from condensed water separating tank 8.
④ Polymer latex did not enter in vacuum pump 9.
⑤ Temperature of the latex on plate 22 of latex discharging chamber 11 further rose to 105°C, and pressure in the tower also increased to 0.123 MPa.
⑥ Amount of the latex discharged from the latex discharging chamber to the latex withdrawing tank decreased, and 2 hours after the start of the operation, the latex became incapable of being discharged. Accordingly, the operation was terminated.

Since a latex was not discharged to the latex withdrawing tank due to a bad operating condition of the apparatus, quality evaluation of the latex after removal of monomer was unable to perform.

After termination of the operation, the inside of latex discharging chamber 11 was observed to find that clay-like coagula of a latex polymer were deposited on plate 22 to the extent of 60 mm thickness, and interior wall of the tower was covered with a thick film of the latex.

Treating conditions and the results obtained in Examples and Comparative Examples are shown together in Tables 1 and 2 below.

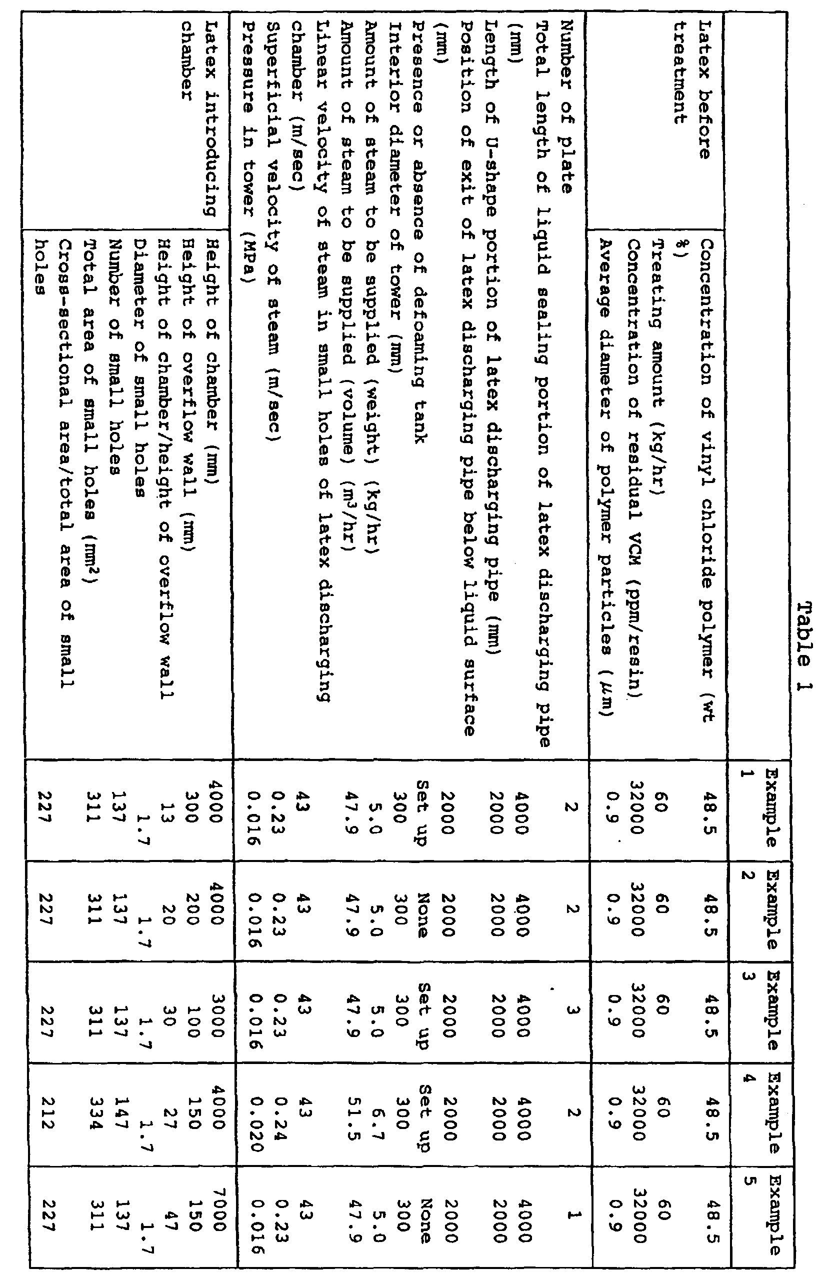

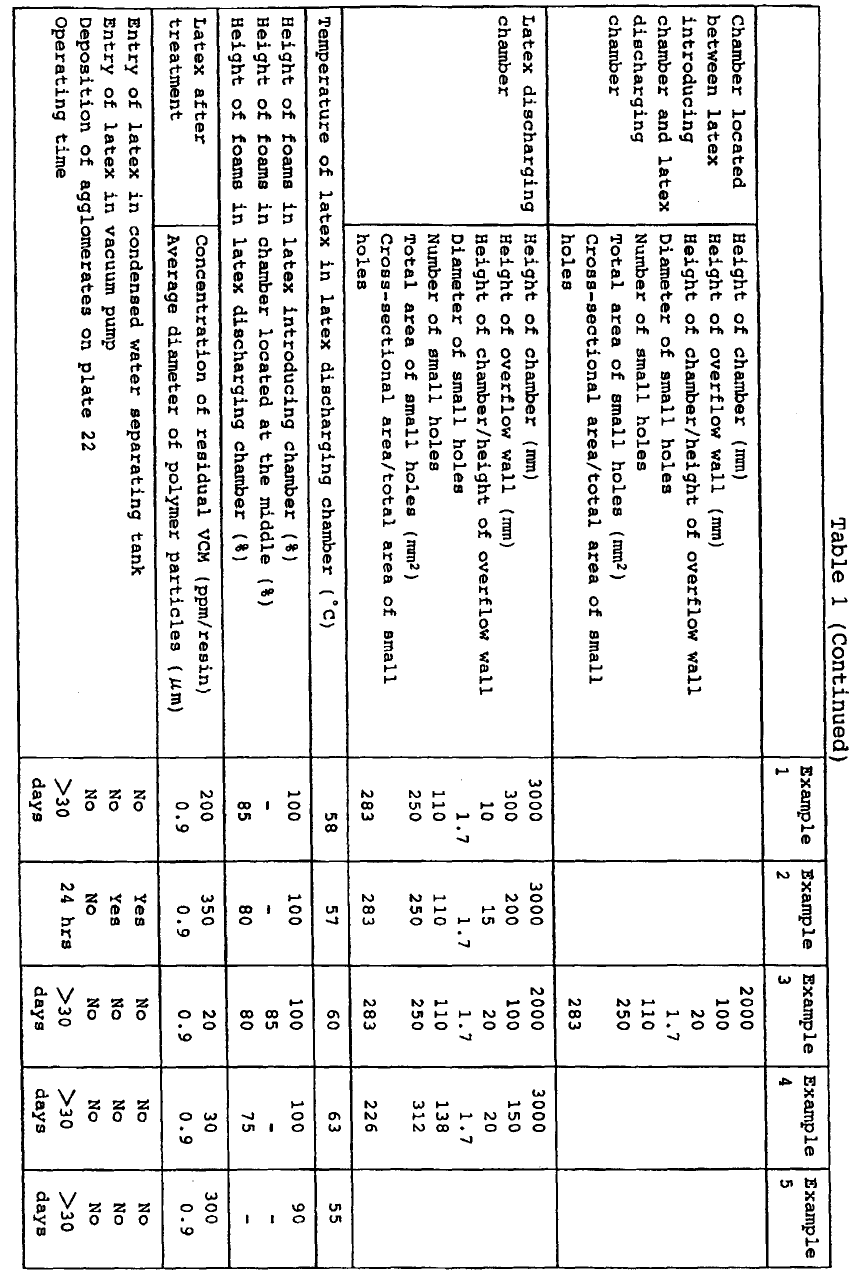

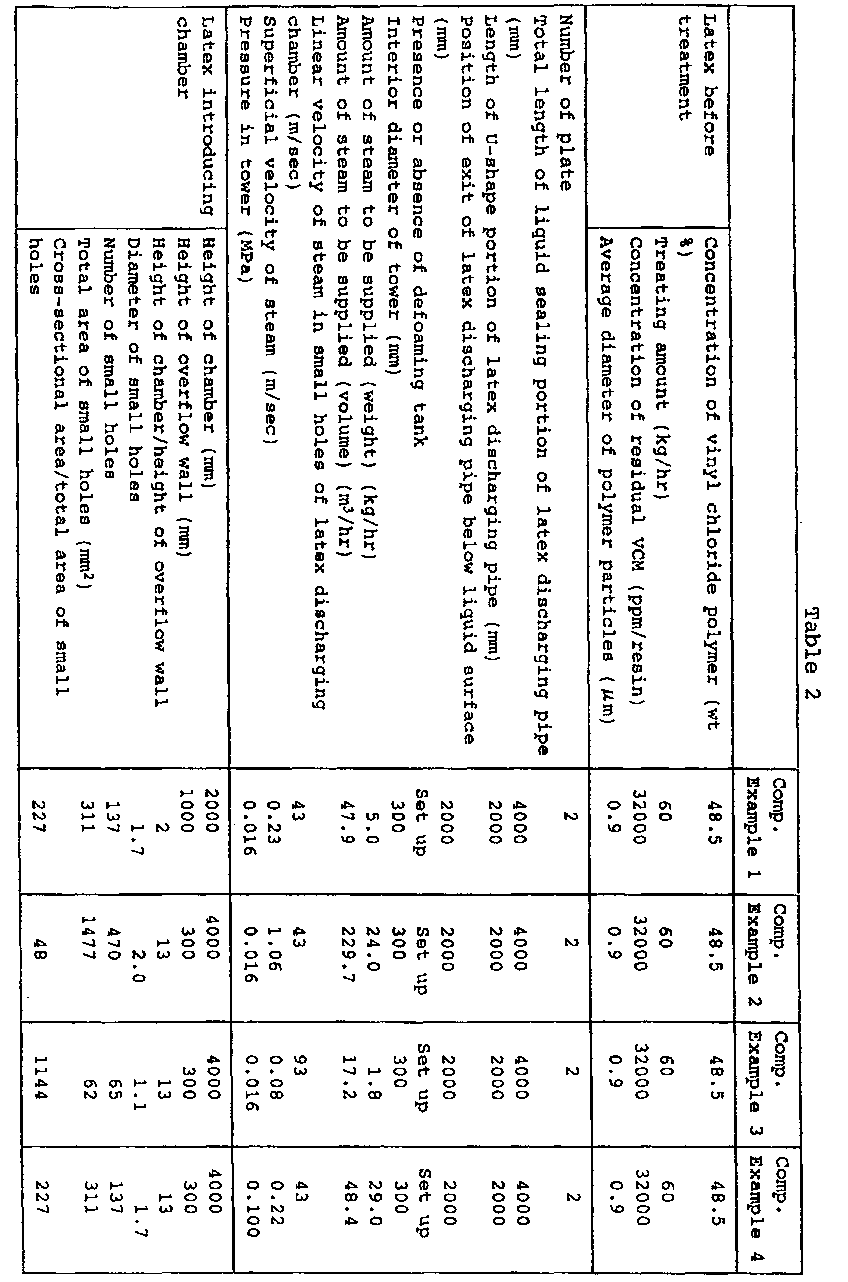

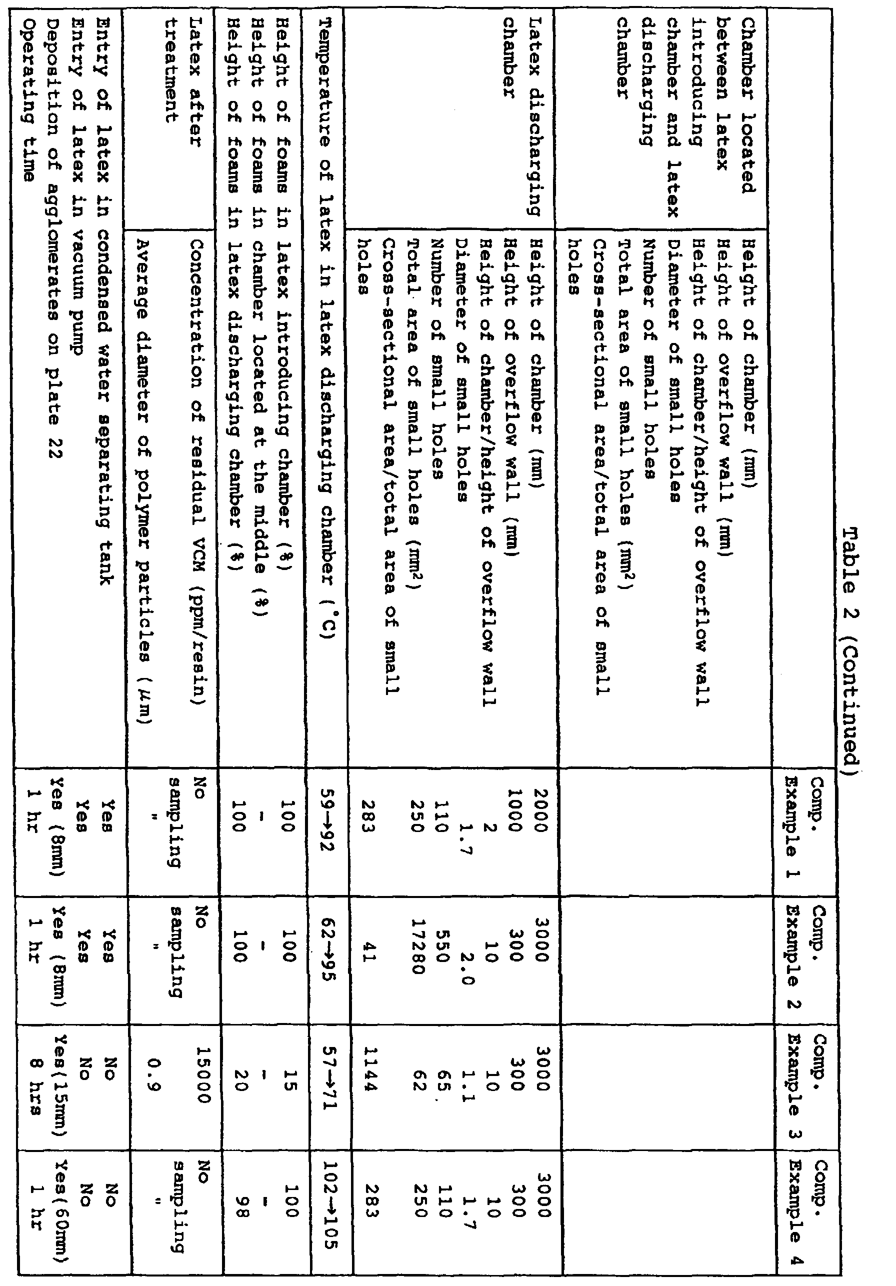

### INDUSTRIAL APPLICABILITY

When the apparatus of the present invention is used, unreacted monomer existing in a polymer latex can be removed at a high efficiency even when a defoaming agent is not used. The apparatus of the present invention can preferably be used for removing residual monomer from a vinyl chloride polymer latex having a high foaming or bubbling property.

## Claims

1. An apparatus for removing unreacted monomer from a polymer latex containing the unreacted monomer which apparatus comprising
a cylindrical tower,
one or more plates which have many small holes perforated therethrough and are provided in a vertical direction in the tower,
partition walls and an overflow wall formed on each of the plates,
one or more chambers formed on one or more of the plates with the plate being their bottom surface,
a latex discharging port provided at one of the chambers at the very least,
at least one latex introducing port provided at a position higher than the latex discharging port,
a deaerating port provided at a position higher than the latex introducing port and connected to a pressure reducing pump provided outside the tower to reduce the pressure in the tower, and
a steam introducing port provided below the plate which forms the bottom surface of the chamber at which the latex discharging port is provided,
the chambers standing 3 to 300 times as high as the overflow wall, and the cross-sectional area of the tower at the position where any one of the plates is provided being 50 to 1000 times as large as the total area of the small holes perforated through the plate.

2. The apparatus according to claim 1 wherein the tower comprises two or more plates; a latex discharging port provided at the chamber formed on the lowermost plate; at least one latex introducing port provided at the chamber formed on at least one of the plates at a position higher than the lowermost plate; and a downcomer for flowing down a latex therethrough from an upper plate to a lower plate.

3. The apparatus according to claim 1 wherein the number of the plate provided in the tower is 1 to 4.

4. The apparatus according to claim 1 wherein the total of the height of the overflow walls formed on each of the plates is 25 to 1500 mm.

5. The apparatus according to claim 1 wherein defoaming means is provided between the deaerating port and the pressure reducing pump, and/or inside the tower.

6. The apparatus according to claim 5 wherein the defoaming means is a device for adding a liquid containing a defoaming agent, steam ejecting device, foam crushing blade, defoaming plate, or cyclone.

7. The apparatus according to claim 5 wherein the apparatus further comprises a line for introducing a defoamed latex from the defoaming means into the tower again.

8. The apparatus according to claim 1 wherein the apparatus further comprises a latex discharging pipe connected to the latex discharging port, the latex discharging pipe having a liquid sealing portion.

9. The apparatus according to claim 8 wherein the apparatus further comprises a latex withdrawing tank connected to the latex discharging port through the latex discharging pipe.

10. The apparatus according to claim 8 wherein the cross-sectional area of the latex discharging pipe is 1/10 to 1/1000 of the cross-sectional area of the tower, and the total length of the liquid sealing portion is 500 to 5000 mm.

11. The apparatus according to claim 10 wherein at least a part of the liquid sealing portion is formed by a U-shape sealing pipe.

12. The apparatus according to claim 11 wherein another part of the liquid sealing portion is arranged such that the exit of the latex discharging pipe is positioned below the liquid surface of the latex stored in the latex withdrawing tank.

13. The apparatus according to claim 5 wherein the defoaming means is provided between the uppermost plate in the tower and the deaerating port.

14. A process for removing unreacted monomer from a polymer latex containing the unreacted monomer which process comprises using an apparatus comprising
a cylindrical tower,
one or more plates which have many small holes perforated therethrough and are provided in a vertical direction in the tower,
partition walls and an overflow wall formed on each of the plates,
one or more chambers formed on one or more of the plates with the plate being their bottom surface,
a latex discharging port provided at one of the chambers at the very least,
at least one latex introducing port provided at a position higher than the latex discharging port,
a deaerating port provided at a position higher than the latex introducing port and connected to a pressure reducing pump provided outside the tower to reduce the pressure in the tower, and
a steam introducing port provided below the plate which forms the bottom surface of the chamber at which the latex discharging port is provided,
the chambers standing 3 to 300 times as high as the overflow wall, and the cross-sectional area of the tower at the position where any one of the plates is provided being 50 to 1000 times as large as the total area of the small holes perforated through the plate,
and operating the apparatus under the conditions that the pressure in the chamber in which the latex is introduced is 0.04 to 0.07 MPa and that the total depth of the latex on each of the plates is 25 to 1500 mm.

15. The process according to claim 14 wherein the apparatus is operated under the condition that the temperature of the latex flowing on the plate positioned directly above the chamber at which the steam introducing port is provided is 30 to 90°C.

16. The process according to claim 14 wherein the apparatus is operated under the condition that the linear velocity of the steam passing through the small holes perforated through the plate which forms the bottom surface of the chamber at which the latex discharging port is provided is 10 to 100 m/sec.

17. The process according to claim 14 wherein the apparatus further comprises a latex discharging pipe connected to the latex discharging port, and the apparatus is operated under the condition that the flow speed of the latex in the latex discharging pipe is 0.01 to 5 m/sec.
